(19) Europäisches Patentamt
European Patent Office
Office européen des brevets

(11) Veröffentlichungsnummer: 0 285 933
B1

(12) # EUROPÄISCHE PATENTSCHRIFT

(45) Veröffentlichungstag der Patentschrift: 31.10.90

(51) Int. Cl.[5]: C11D 3/37

(21) Anmeldenummer: 88104887.0

(22) Anmeldetag: 26.03.88

(54) **Verwendung von alkoxylierten, Carboxylgruppen enthaltenden Polymerisaten in Waschmitteln.**

(30) Priorität: 03.04.87 DE 3711296

(43) Veröffentlichungstag der Anmeldung: 12.10.88 Patentblatt 88/41

(45) Bekanntmachung des Hinweises auf die Patenterteilung: 31.10.90 Patentblatt 90/44

(84) Benannte Vertragsstaaten: AT BE CH DE ES FR GB IT LI NL SE

(56) Entgegenhaltungen:
EP-A- 0 103 254
EP-A- 0 116 930
EP-A- 0 168 547
US-A- 3 330 765

(73) Patentinhaber: BASF Aktiengesellschaft, Carl-Bosch-Strasse 38, D-6700 Ludwigshafen(DE)

(72) Erfinder: Baur, Richard, Dr., Nelkenstrasse 1, D-6704 Mutterstadt(DE)
Erfinder: Denzinger, Walter, Wormser Landstrasse 65, D-6720 Speyer(DE)
Erfinder: Eckell, Albrecht, Dr., Paul-Klee-Strasse 2, D-6710 Frankenthal(DE)
Erfinder: Hartmann, Heinrich, Dr., Weinheimer Strasse 46, D-6703 Limburgerhof(DE)
Erfinder: Mueller, Josef, Dr., Rieslingstrasse 15, D-6711 Grosskarlbach(DE)
Erfinder: Raubenheimer, Hans-Juergen, Benzstrasse 6, D-6834 Ketsch(DE)
Erfinder: Trieselt, Wolfgang, Dr., Alwin-Mittasch-Platz 1, D-6700 Ludwigshafen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus der US-A 3 880 765 ist die Herstellung von alkoxylierten, wasserlöslichen Polymeristen der Acrylsäure bekannt. Gemäß einer in der US-PS beschriebenen Verfahrensvariante werden Polymerisate der Acrylsäure mit 2 bis 60 Gew.%, bezogen auf das eingesetzte Polymerisat, mit einem Alkylenoxid, vorzugsweise Ethylenoxid, in wäßrigem Medium umgesetzt. Die dadurch herstellbaren alkoxylierten Polymerisate werden beispielsweise mit Natronlauge neutralisiert und in Mengen von 10 bis 100 ppm, gelegentlich auch bis zu 500 ppm, bei der Förderung von Erdöl verwendet, um die Bildung von Abscheidungen aus Wasser an metallischen Oberflächen zu verhindern.

Aus der EP-A 0 116 930 sind Copolymerisate bekannt, die 40 bis 90 Gew.-% mindestens einer ethylenisch ungesättigten Monocarbonsäure mit 3 bis 5 C-Atomen und 60 bis 10 Gew.-% mindestens einer ethylenisch ungesättigten Dicarbonsäure mit 4 bis 8 C-Atomen oder der entsprechenden Dicarbonsäureanhydride einpolymerisiert enthalten und die mit den Anlagerungsprodukten von vorzugsweise Ethylenoxid an 1 bis 8 C-Atome enthaltenden Alkoholen oder Alkylphenolen verestert sind. Die Copolymerisate werden als Zusatz zu pulverförmigen und flüssigen Waschmittel-, Spülmittel- und Reinigerformulierungen verwendet. Sie wirken darin als Gerüststoffe (Builder) und können anstelle von Phosphaten verwendet werden.

Aufgabe der Erfindung ist es, einen Zusatz für Waschmittel zur Verfügung zu stellen, der als Builder wirksam ist und ein möglichst hohes Dispergiervermögen für Pigmentschmutz in der Waschflotte besitzt.

Die Aufgabe wird erfindungsgemäß gelöst durch Verwendung von Polymerisaten in Waschmitteln, wenn man alkoxylierte, Carboxylgruppen enthaltende Polymerisate, die herstellbar sind durch Umsetzung von

(A) Polymerisaten, die mindestens eine monoethylenisch ungesättigte $C_3$- bis $C_6$-Carbonsäure einpolymerisiert enthalten, mit
(B) 3 bis 80 Gew.%, bezogen auf die Polymerisate (A), Ethylenoxid, Propylenoxid, n-Butylenoxid, Isobutylenoxid oder deren Gemische

in wäßrigem Medium bei Temperaturen bis zu 150°C,
als Builder, der gleichzeitig ein Inkrustationsinhibitor und ein Dispergiermittel für Schmutzteilchen in der Waschflotte ist, in Waschmitteln in Mengen von 0,1 bis 20 Gew.% einsetzt.

Als Polymerisate (A) eignen sich Homopolymerisate von monoethylenisch ungesättigten $C_3$- bis $C_6$-Carbonsäuren bzw. Copolymerisate, die mindestens 20 Gew.% einer monoethylenisch ungesättigten $C_3$- bis $C_6$-Carbonsäure einpolymerisiert enthalten. Geeignete monoethylenisch ungesättigte Carbonsäuren dieser Art sind beispielsweise Acrylsäure, Methacrylsäure, Ethacrylsäure, Vinylessigsäure, Allylessigsäure, Propylidenessigsäure, Ethlylidenpropionsäure, Mesaconsäure, Fumarsäure, Methylenmalonsäure, Zitraconsäure, Maleinsäure und Itaconsäure. Vorzugsweise verwendet man von den genannten Carbonsäuren, Acrylsäure, Methacrylsäure, Maleinsäure, Fumarsäure, Itaconsäure oder deren Mischungen.

Als Polymerisate (A) kommen auch Copolymerisate aus

(a) monoethylenisch ungesättigten $C_3$- bis $C_6$-Monocarbonsäuren und
(b) monoethylenisch ungesättigten Dicarbonsäuren mit 4 bis 6 Kohlenstoffatomen in Betracht.

Als Monomere der Gruppe (a) werden vorzugsweise Acrylsäure und/oder Methacrylsäure eingesetzt. Monomere der Gruppe (b) sind beispielsweise Maleinsäure, Itaconsäure, Mesaconsäure, Fumarsäure, Methylenmalonsäure und Citraconsäure. Vorzugsweise verwendet man aus dieser Gruppe von Monomeren Maleinsäure. Die Copolymerisate enthalten 1 bis 99 Gew.% der Monomeren der Gruppe (a) und 99 bis 1 Gew.% der Monomeren der Gruppe (b) einpolymerisiert.

Die Carboxylgruppen enthaltenden Copolymerisate können durch Einpolymerisieren von weiteren Monomeren modifiziert sein. Derartige Copolymerisate enthalten als Monomer

(a) 5 bis 40 Gew.% mindestens einer monoethylenisch ungesättigten $C_3$- bis $C_6$-Monocarbonsäure, vorzugsweise Acrylsäure und/oder Methacrylsäure,
(b) 5 bis 40 Gew.% mindestens einer monoethylenisch ungesättigten Dicarbonsäure mit 4 bis 6 C-Atomen, vorzugsweise Maleinsäure und/oder Itaconsäure
(c) 0 bis 80 Gew.% mindestens eines Hydroxy-$C_2$- bis $C_6$-Alkylesters von Mono- oder Dicarbonsäuren gemäß (a) und (b) und
(d) 0 bis 20 Gew.% mindestens eines Amids, Nitrils oder eines Esters von einwertigen 1 bis 4 C-Atome enthaltenden Alkohols von Mono- oder Dicarbonsäuren gemäß (a) und (b), Vinylacetat, Vinylproponat, Vinylphosphonsäure, Vinylsulfonat und/oder Acrylamido-2-methylpropansulfonsäure.

Die Summe der Gewichtsprozente (a) bis (d) beträgt dabei immer 100. Als Monomere (c) eignen sich beispielsweise Hydroxyethylacrylat, Hydroxyethylmethacrylat, Hydroxypropylacrylat, Hydroxypropylmethacrylat, Hydroxybutylacrylat, Hydroxybutylmethacrylat, Hydroxyhexylacrylat, Monohydroxyethyl-

maleinat, Dihydroxyethylmaleinat, Monohydroxypropylmaleinat, Dihydroxypropylmaleinat, Monohydroxybutylmaleinat, Dihydroxybutylmaleinat, Monohydroxyethylitaconat, Dihydroxyethylitaconat, Monohydroxypropylitaconat, Dihydroxypropylitaconat und Monohydroxybutylitaconat. Von den Hydroxyalkylestern, die sich von Diolen mit 3 bis 6 Kohlenstoffatomen ableiten, können sämtliche Isomeren verwendet werden. Vorzugsweise verwendet man als Monomer der Gruppe (c) Hydroxyethylacrylat, Hydroxyethylmethacrylat, Hydroxypropylacrylat, Hydroxybutylacrylat und Hydroxypropylmethacrylat. Die Monomeren der Gruppe (c) sind vorzugsweise in einer Menge von 20 bis 60 Gew.% am Aufbau der Copolymerisate beteiligt. Als Componente (d) eignen sich beispielsweise Acrylamid, Methacrylamid, Acrylnitril, Methacrylnitril, Acrylsäureester von Alkoholen mit 1 bis 4 C-Atomen, z.B. Methylacrylat, Ethylacrylat, n-Propylacrylat, Isopropylacrylat, n-Butylacrylat, Isobutylacrylat und Tertiärbutylacrylat sowie die entsprechenden Ester der Methacrylsäure sowie Monoester von Dicarbonsäuren, wie Maleinsäuremonomethylester, Maleinsäuredimethylester, Maleinsäuremonoethylester, Maleinsäuremono-n-propylester, Maleinsäure-di-isopropylester, Maleinsäuremono-n-butylester, Maleinsäuremonosekundärbutylester, Maleinsäuredi-n-propylester, Maleinsäuredi-n-butylester und Maleinsäuredi-sekundärbutylester sowie die entsprechenden Ester der Fumarsäure und Itaconsäure, Vinylacetat, Vinylpropianat, Vinylphosphonsäure, Vinylsulfonsäure und/oder Acrylamido-2-methylpropansulfonsäure. Sofern die Copolymerisate mit Monomeren der Gruppe (d) modifiziert werden, beträgt der Anteil der Monomeren der Gruppe (d) am Aufbau der Copolymerisate bis zu 20, vorzugsweise 5 bis 15 Gew.%.

Die oben angegebenen Homo- und Copolymerisate haben Molekulargewichte (Massenmittel) von 500 bis 1 Million, vorzugsweise 10 000 bis 500 000. Anstelle des Molekulargewichts werden die Polymerisate im folgenden durch den K-Wert nach Fikentscher charakterisiert. Der K-Wert der Homo- und Copolymerisate beträgt 8 bis 200, vorzugsweise 15 bis 100. Er wird bestimmt nach H. Fikentscher in 1 %iger wäßriger Lösung bei einem pH-Wert von 7, einer Temperatur von 25°C bei einer Polymerkonzentration des Natrium-Salzes des Polymerisates von 1 Gew.%.

Die oben beschriebenen Polymerisate (A), die mindestens 20 Gew.% einer monoethylenisch ungesättigten $C_3$- bis $C_6$-Carbonsäure einpolymerisiert enthalten, werden in Form der freien Säuregruppen oder in teilweise neutralisierter Form in wäßrigem Medium mit Alkylenoxiden umgesetzt. Falls die Polymerisate (A) außer Carboxylgruppen keine funktionellen Gruppen enthalten, die mit den Alkylenoxiden reagieren, beträgt der maximale Neutralisationsgrad 70 Mol%. Enthalten die Polymerisate A jedoch außer Carboxylgruppen noch z.B. Hydroxylgruppen, so können die Carboxylgruppen dieser Polymerisate auch zu 100 % neutralisiert sein. Die Alkylenoxide werden in diesem Fall an die Hydroxylgruppen der Copolymerisate angelagert. Die Polymerisate (A) werden vorzugsweise in Form der freien Säuren der Alkoxylierung unterworfen. Die Polymerisate (A) werden zu diesem Zweck in einem wäßrigen Medium gelöst. Die Polymerkonzentration beträgt 5 bis 90, vorzugsweise 20 bis 70 Gew.%. Als wäßriges Medium wird vorzugsweise reines Wasser eingesetzt, z.B. von Schwebstoffen befreites Flußwasser, entsalztes Wasser oder destilliertes Wasser. Außerdem sollen darunter Mischungen aus Wasser und Lösemitteln verstanden werden, die in Wasser löslich sind, z.B. Alkohole, wie Methanol, Ethanol, n-Propanol und Isopropanol, Aceton, Dimethylformamid, Dioxan und Tetrahydrofuran. Die mit Wasser mischbaren Lösemittel werden vor allem dann eingesetzt, wenn sich die Polymerisate (A) nicht vollständig in Wasser auflösen. Selbstverständlich kann man auch Gemische organischer Lösemittel und Wasser als wäßriges Medium einsetzen. Der Gehalt von Lösemittelmischungen an organischem Lösemittel kann bis zu 50 Gew.% betragen.

Die Polymerisate der Gruppe (A) werden mit den oben unter (B) angegebenen Alkylenoxiden umgesetzt. Bei diesen Alkylenoxiden handelt es sich um Ethylenoxid, Propylenoxid, n-Butylenoxid, Isobutylenoxid oder Gemische der genannten Alkylenoxide. Die Umsetzung der Polymeriate mit den Alkylenoxiden wird in wäßrigem Medium bei Temperaturen von 5 bis 150, vorzugsweise 10 bis 80°C durchgeführt. Die Umsetzung kann bei Normaldruck oder erhöhtem Druck vorgenommen werden. Sofern die Reaktion unter erhöhtem Druck durchgeführt wird, betragen die Drücke bis zu 50 bar. Üblicherweise wird die Umsetzung bei Drücken bis zu 20 bar durchgeführt. Das Alkylenoxid bzw. eine Mischung der Alkylenoxide wird dabei an die Polymerisate angelagert. Als Nebenprodukt entstehen geringe Mengen an Diolen. Die Diolbildung, die durch Anlagerung von Wasser an die Alkylenoxide zustande kommt, kann dadurch zurückgedrängt werden, daß man die Umsetzung der Polymerisate (A) und der Alkylenoxide (B) in Gegenwart von 0,5 bis 5 Gew.%, bezogen auf die eingesetzten Alkylenoxide, an Thioethern oder SH-Gruppen enthaltenen Verbindungen vornimmt. Geeignete Thioether können beispielsweise mit Hilfe der allgemeinen Formel

$R-S-R^1$, in der $R,R^1 = C_1$- bis C10-Alkyl,
$-C_6H_5$, $-CH_2-C_6H_5$, $-CH_2-COOH$, $-CH_2-(CH_2)_n-COOH$, $-(CH_2)_n-CH_2-OH$ und n = 1 bis 8 ist,

charakterisiert werden. Beispiele für solche Thioether sind Dimethylsulfid, Diethylsulfid, Methylphenylsulfid, Thiodiessigsäure, Thiodibuttersäure, Ethylthioethanol und Thiodiglykol. Außerdem eignen sich Thioglykol, Thioethanol, Thioessigsäure, Thiobuttersäure und Dodecylmercaptan. Der pH-Wert des Reaktionsgemisches beträgt bei 20°C höchstens 6, und liegt vorzugsweise in dem Bereich von 0,5 bis 5. Bei hydroxylgruppenhaltigen Polymeren kann auch bei pH-Werten von > 6 gearbeitet werden. Die Umsetzung wird vorzugsweise unter erhöhtem Druck vorgenommen. Man verfährt dabei so, daß man entweder einen Teil oder die gesamte Menge an Polymerisaten (A) gelöst in wäßrigem Medium im Druckbehälter vorlegt und dann einen Teil bzw. das gesamte Alkylenoxid aufpreßt. Um die Reaktionswärme gut abführen zu können, wird das Alkylenoxid portionsweise bzw. kontinuierlich in Abhänigkeit vom Fortschritt der Umsetzung zudosiert. Vorteilhaft wird während der gesamten Reaktionsdauer für eine gute Durchmischung der Komponenten gesorgt, z.B. durch Rühren. Vorzugsweise verwendet man Autoklaven, die mit einem Rührer sowie mit Heiz- und Kühleinrichtungen ausgestattet sind. Manchmal ist es vorteilhaft, das Alkylenoxid bei niedriger Temperatur zuzugeben und anschließend zur völligen Umsetzung die Temperatur zu erhöhen, beispielsweise bei 40°C das Alkylenoxid zuzudosieren und anschließend bei 80° nachreagieren zu lassen. Nach Beendigung der Reaktion erhält man alkoxylierte Carboxylgruppen enthaltende Polymerisate, die in dieser Form oder nach einer Neutralisation direkt in Waschmitteln einsetzbar sind. Die Umsetzungsprodukte können jedoch auch aus den wäßrigen Lösungen isoliert und in fester Form, z.B. als Pellets oder Schuppen, in Waschmittelformulierungen eingearbeitet werden.

Zur Neutralisation der alkoxylierten Carboxylgruppen, enthaltenden Polymerisate verwendet man beispielsweise Natronlauge, Kalilauge, Ammoniak, und Amine, z.B. $C_1$- bis $C_{18}$-Alkylamine, wie Ethylamin, Propylamin, Butylamin, Dibutylamin, Hexylamin, Stearylamin, Ethanolamin, Morpholin, Diethanolamin und Triethanolamin.

Bis zu 80 Mol%, vorzugsweise 20 bis 60 Mol% der Carboxylgruppen der Polymerisate (A) werden mit den Alkylenoxiden umgesetzt. Dieser Anteil entspricht einer Menge von 3 bis 80 Gew.%, vorzugsweise 6 bis 60 Gew.% an Alkylenoxiden, bezogen auf Polymerisate (A).

Die alkoxylierten Carboxylgruppen enthaltenden Polymerisate werden Waschmitteln in einer Menge von 0,1 bis 20, vorzugsweise 1 bis 15 Gew.% zugesetzt. Sie wirken in Waschflotten als Builder, Inkrustationsinhibitor und als Dispergiermittel für Schmutzpartikel, die von dem textilen Material abgelöst werden und sich in der Waschflotte befinden.

Die alkoxylierten, Carboxylgruppen enthaltenden Polymerisate können erfindungsgemäß sowohl phosphathaltigen als auch phosphatfreien Waschmitteln zugesetzt werden. Die phosphorhaltigen Waschmittel haben einen reduzierten Phosphatgehalt von weniger als 25 Gew.% Natriumtriphosphat. Die alkoxylierten Polymerisate werden dabei in Form einer Lösung oder in Mischung mit anderen Bestandteilen, z.B. zusammen mit Stellmitteln, wie Natriumsulfat oder Gerüststoffen (Zeolithen) oder anderen Hilfsstoffen, der Waschmittelformulierung zugesetzt. Die erfindungsgemäß zu verwendenden Produkte können sowohl zu pulverförmigen Waschmitteln als auch zu flüssigen Waschmittelformulierungen zugesetzt werden.

Wesentlicher Bestandteil handelsüblicher, pulverförmiger Waschmittel, die entweder Natriumtriphosphat enthalten oder phosphatfrei sind, weisen als wesentlichen Bestandteil Tenside auf, z.B. $C_8$- bis $C_{12}$-Alkylphenolethoxylate, $C_{12}$- bis $C_{20}$-Alkanolethoxylate, sowie Blockcopolymerisate des Ethylenoxids und Propylenoxids. Die Polyalkylenoxide sind bei Raumtemperatur bis zu Temperaturen von 50°C Feststoffe und gut in Wasser löslich bzw. dispergierbar. Es handelt sich hierbei um lineare oder verzweigte Umsetzungsprodukte von Ethylenoxid mit Propylenoxid und/oder Isobutylenoxid, die eine Blockstruktur besitzen oder die auch statistisch aufgebaut sein können. Die Endgruppen der Polyalkylenoxide können ggf. verschlossen sein. Hierunter soll verstanden werden, daß die freien OH-Gruppen der Polyalkylenoxide verethert und/oder verestert und/oder aminiert und/oder mit Isocyanaten umgesetzt sein können.

Als Bestandteil pulverförmiger Waschmittel eignen sich auch anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkansulfosuccinate und sulfatierte ethoxylierte $C_{12}$- bis $C_{16}$-Alkanole. Die pulverförmigen Waschmittel können außerdem ggf. Polycarbonsäuren bzw. deren Salze enthalten, z.B. Weinsäure oder Zitronensäure. Der Gehalt der pulverförmigen Waschmittel an Tensiden beträgt gewöhnlich 5 bis 20 Gew.%.

Ein weiterer wichtiger Bestandteil in Waschmittelformulierungen sind Inkrustationsinhibitoren. Bei diesen Stoffen handelt es sich beispielsweise um Homopolymerisate der Acrylsäure, Methacrylsäure, und Maleinsäure bzw. um Copolymerisate, z.B. Copolymeriste aus Maleinsäure und Methacrylsäure, Copolymerisate aus Maleinsäure und Acrylsäure bzw. um Copolymerisate aus Acrylsäure und/oder Methacrylsäure und Acrylsäureestern, Methacrylsäureestern, Vinylestern, Allylestern, Itaconsäureestern, Itaconsäure, Methylenmalonsäure, Methylenmalonsäureester, Crotonsäure oder Crotonsäureester. Außerdem kommen Copolymerisate aus Maleinsäure und Olefinen mit 2 bis 18 C-Atomen und/oder $C_1$- bis $C_4$-Alkylvinylethern in Betracht. Das Molekulargewicht der Homo- und Copolymerisate beträgt 1 000 bis 100 000. Die Inkrustationsinhibitoren werden in einer Menge von 0,5 bis 10 Gew.% in Waschmitteln verwendet, wobei sie in nichtneutralisierter Form, als Alkali- oder Ammoniumsalz sowie in partiell neutralisierter Form, z.B. Neutralisation von 40 bis 60 % der Carboxylgruppen, eingesetzt werden.

Weitere Mischungsbestandteile von Waschmitteln können gegebenenfalls Korrosionsinhibitoren, monomere, oligomere und polymere Phosphonate, Ethersulfate auf der Basis von ungesättigten Fettalkoholen oder deren Alkalisalze sein. Pulverförmige Waschmittel können wahl weise auch Zeolithe enthalten. Falls Zeolithe eingesetzt werden, beträgt die Menge an Zeolithen, bezogen auf die gesamte Waschmittelformulierung, 5 bis 30 Gew.%. Die Waschmittelformulierungen können außerdem gegebenenfalls Bleichmittel in einer Menge von 3 bis 25 Gew.% enthalten, z.B. Natriumperborat. Außerdem können die Waschmittelformulierungen ggf. noch Bleichaktivatoren, Weichmacher, Entschäumer, Parfum, optische Aufmittelformulierungen ggf. noch Bleichaktivatoren, Weichmacher, Entschäumer, Parfum, optische Aufheller und Enzyme enthalten. Stellmittel, wie Natriumsulfat, können in einer Menge von bis zu 40 Gew.% im Waschmittel enthalten sein.

Die erfindungsgemäß zu verwenden alkoxylierten Carboxylgruppen enthaltenden Polymerisate können auch als Zusatz zu Flüssigwaschmitteln verwendet werden. Die Flüssigwaschmittel enthalten als wesentliche Abmischkomponente bei Raumtemperatur flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Der Tensidgehalt der Flüssigwaschmittel kann zwischen 5 und 50 % liegen, je nach Typ des Flüssigwaschmittels.

Die erfindungsgemäß zu verwendenden alkoxylierten Polymerisate zeigen sowohl in phosphatfreien als auch in phosphathaltigen Waschmittelformulierungen eine mit den wirksamsten handelsüblichen polymeren Inkrustationsinhibitoren vergleichbare Wirkung und besitzen darüber hinaus ein stark verbessertes Dispergiervermögen für den beim Waschen von der Wäsche abgelösten Partikelschmutz.

Die in den Beispielen angegebenen Teile sind Gewichtsteile, die Angaben in "%" beziehen sich auf das Gewicht der Stoffe. Die K-Werte der Carboxylgruppen enthaltenden Polymerisate wurden nach H. Fikentscher, Zellulosechemie, Band 13, 58 bis 64 und 71 bis 74 (1932) in wäßriger Lösung bei einer Temperatur von 25°C, einer Polymerkonzentration von 1 Gew.% des Natriumsalzes bei einem pH-Wert von 7 gemessen; dabei bedeutet $K = k \cdot 10^3$.

Beispiele

Herstellung der alkoxylierten, Carboxylgruppen enthaltenden Polymerisate

In einem 6 l fassenden heizbaren und kühlbaren Autoklaven, der mit einem Rührer und Dosiervorrichtungen ausgestattet ist, wird die jeweils in Tabelle 1 angegebenen Lösung des Polymerisats und der dort ebenfalls bezeichnete Katalysator eingebracht. Der Autoklav wird dann druckdicht verschlossen. Man preßt dann dreimal Stickstoff bis zu einem Druck von 4 bar auf und entspannt nach jedem Aufpreßvorgang. Danach wird im Autoklaven ein Stickstoffdruck von 2 bar eingestellt und der Autoklaveninhalt auf die in der Tabelle angegebene Reaktionstemperatur erhitzt. Nach Erreichen der Reaktionstemperatur wird das jeweils in der Tabelle 1 angegebene Alkylenoxid über einen Druckbehälter zudosiert. Die dabei entstehende Reaktionswärme wird durch Kühlung des Autoklaven abgeführt. Etwa 1/4 Stunde nach Ende der Alkylenoxidzugabe ist die Umsetzung weitgehend abgeschlossen. Man erhitzt den Autoklaveninhalt danach noch 2 Stunden unter Rühren und kühlt danach das Reaktionsgemisch ab. Man erhält jeweils wäßrige Lösungen, deren Feststoffgehalt durch 2 stündiges Trocknen bei 150°C im Trockenschrank bestimmt werden. Die Feststoffgehalte sind in Tabelle 1 angegeben. Die ebenfalls in Tabelle angegebenen Alkylenglykolgehalte im Reaktionsgemisch wurden gaschromatografisch ermittelt.

Tabelle 1

| Polymer Nr. | eingesetztes Carboxylgruppenhaltiges Polymerisat Menge [g] | | Alkylenoxid [g] | Katalysator [g] | Temp. [°C] | Zulaufzeit für Alkylenoxid [Std.] |
|---|---|---|---|---|---|---|
| 1 | 2147 | Copolymerisat aus 50 Gew.% AS und 50 Gew.% MS, zu 50 % mit NaOH neutr., 42,6 %ige Lösung in Wasser, pH = 4,5, K-Wert: 54 | 155 PO | 3,1 Thiodiglykol | 80 | 0,5 |
| 2 | 2009 | Copolymerisat aus 70 Gew.% AS und 30 Gew.% MS, zu 30 % mit NaOH neutr., 45,3 %ige Lösung in Wasser, pH = 3,9, K-Wert: 66 | 246 PO | 4,9 Ethylthioethanol | 30 | 2 |
| 3 | 2107 | Copolymerisat aus 50 Gew.% AS und 50 Gew.% MS, 50,5 %ige Lösung in Wasser, pH = 0,7, K-Wert: 20 | 321 PO | 6,5 Thiodiessigsäure | 35 | 2,5 |
| 4 | 3529 | Copolymerisat wie bei Polymer 2 | 518 BuO | 10,5 Thiodiglykol | 45 | 5 |
| 5 | 2107 | Copolymerisat wie bei Polymer 3 | 244 EO | 4,5 Thiodiglykol | 45 | 2,5 |

Tabelle 1 (Fortsetzung)

| Polymer Nr. | Aussehen der Lösung des alkoxylierten Polymers | Feststoffgehalt [%] der Lösung | pH-Wert der Lösung | K-Wert des alkoxylierten Polymers | Als Nebenprodukt gebildetes Alkylenglykol (%) |
|---|---|---|---|---|---|
| 1 | gelb, klar, viskos | 45,2 | 4,9 | 56 | 2,6 Propylenglykol |
| 2 | gelblich, klar, viskos | 49,9 | 4,3 | 69 | 3,3 Propylenglykol |
| 3 | gelb, klar, viskos | 53,6 | 1,2 | 18 | 3,4 Propylenglykol |
| 4 | gelblich, klar viskos | 50,6 | 4,3 | 72 | 2,6 n-Butylenglykol-1,2 |
| 5 | gelb, klar, viskos | 52,3 | 0,9 | 17,5 | 2,1 Ethylenglykol |

MS : Maleinsäure
AS : Acrylsäure
EO : Ethylenoxid
PO : Propylenoxid
BuO: n-Butylenoxid-1,2

Die erfindungsgemäß zu verwendenden Polymeren 1 bis 5 werden den im folgenden beschriebenen Prüfmethoden (1) bis (4) unterzogen. Die dabei erhaltenen Meßergebnisse sind in Tabelle 2 zusammengestellt.

(1) Bestimmung der Calciumphosphat- und der Calciumdiphosphat-Dispergierkapazität

Meßprinzip:

Die inhibierende Wirkung von Komplexbildnern oder Dispergiermitteln auf die Ausfällung von Calciumphosphat/diphosphat wird durch Trübungstitration bestimmt. Es wird die zu untersuchende Substanz vorgelegt und in Gegenwart von Natriumphosphat bzw. -diphosphat mit Calciumacetatlösung titriert. Der Endpunkt wird durch die Bildung des Calciumphosphat- bzw. -diphosphat-Niederschlages angezeigt. Durch Verwendung einer ausreichenden Menge an Phosphat/Diphosphat wird sichergestellt, daß die Messung auch dann ein korrektes Ergebnis liefert, wenn die Wirkung nicht nur auf einer Komplexierung der Calciumionen beruht, sondern auch auf der Dispergierung von Calciumphosphat/bzw. diphosphat. Werden nämlich zu kleine Phosphatmengen eingesetzt, besteht die Gefahr, daß das Dispergiervermögen des Produktes nicht ausgeschöpft wird; in diesem Fall wird der Titrationsendpunkt durch die Fällung des Calcium-salzes des Produktes angezeigt.

Während der Titration wird die Änderung der Lichtdurchlässigkeit entweder visuell oder mit Hilfe eines Lichtleiterphotometers verfolgt. Bei letzterem wird ein über Glasfasern in die Lösung geleiteter Lichtstrahl an einem Spiegel reflektiert und die Intensität des reflektierten Lichtes gemessen.

Reagenzien: 4,4 %ige Calciumacetatlösung
Natriumphosphat
oder Natriumdiphosphat
1n Natronlauge
1 %ige HCl

Durchführung:

0,5 g Wirkstubstanz (W.S.) (berechnet als Na-salz) werden in 100 ml dest. Wasser gelöst, anschließend werden 0,5 g Natriumphosphat bzw. -diphosphat zugegeben. Es wird der gewünschte pH-Wert eingestellt und während der Titration konstant gehalten. Standardbedingungen bei Raumtemperatur (RT) und pH 11,0.

Man titriert mit 4,4 %iger Calciumacetatlösung mit einer Zulaufgeschwindigkeit von 1 ml/min. bis zur bleibenden Trübung bzw. bei automatischer Titration (Titroprozessor) mit 0,4 ml/min.

Bei automatischer Titration ist der erste Knickpunkt der Titrationskurve der Endpunkt.

Berechnung:

$$\frac{\text{mg Calciumphosphat/-diphosphat}}{\text{g W.S.}} = \text{Verbrauch an Calciumacetatlösung} \times 52$$

Prüfung der Inkrustierungs-Inhibierung durch Trübungsmessung

Waschflotten trüben bei der Warmlagerung durch Ausfällen von schwerlöslichen Waschmittelbestandteilen ein. Die Endtrübung nach 2 Stunden ist ein Maß für die fällungsverhindernde Wirksamkeit der Inkrustierungsinhibitoren.

Zur Prüfung wird eine phophatfreie Modellwaschflotte verwendet, die mit 6,5 g/l Waschmittel angesetzt wird und das folgendermaßen zusammengesetzt ist (in Gew.%):
2,7 % Natrium-$C_{12}$-Alkylbenzolsulfonat
3,2 % des Anlagerungsproduktes von 25 Mol Ethylenoxid an 1 Mol Talgfettalkohol
10,8 % Na-metasilikat
27,0 % Soda
2,1 % CMC (Carboximethylcellulose)
3 % Polymer
51,2 % Natriumsulfat

Die Warmlagerung erfolgt bei 90°C in Wasser mit 22,4°dH (Ca:Mg 3:1) über einen Zeitraum von 2 Stunden.

Die Messung der Trübung erfolgt nephelometrisch [niedrige Werte der Trübung (NTU-Einheiten) bedeuten, wirksame Produkte, hohe Werte schlecht wirksame Produkte].

(3) Prüfung des Dispergiervermögens für Pigmentschmutz 0,1 g eines Pigmentschmutzes, bestehend aus
86 % Kaolin
8 % Flammruß
4 % Eisenoxid schwarz
2 % Eisenoxid gelb
werden zusammen mit 3 g (W.S.) Polymer in 100 ml Wasser von 20°dH (Ca:Mg 3:1) 1 Minute in einem üblichen Dispergiergerät bei 2000 U/min dispergiert. Anschließend wird die Dispersion über 21 Tage im Standzylinder bei RT gelagert.

Die Beurteilung der Dispersionsstabilität erfolgt visiuell.Sie wird nach folgender Notenskala bewertet:
sehr gut : 100 % Dispersion
gut : 75 % Dispersion
befriedigend : 50 % Dispersion
ausreichend : 25 % Dispersion
ungenügend : 0 % Dispersion, abgesetzt

(4) Prüfung der Inkrustierungsinhibierung im Waschversuch

Zum Nachweis der Wirksamkeit der Polymerisate wurden jeweils Serien von 10 Wäschen im Laundero-meter vorgenommen und die Veränderungen im Aschegehalt als Maß für die Wirksamkeit der Inkrustierungsinhibierung herangezogen.

Prüfungsbedingungen

Flotte: 250 ml
Flottenverhältnis: 1:12,5
Wasserhärte: 22,4°dH (Mg)
Dauer: 30 Minuten
Temperatur: 35 - 60°C (Temperaturprogramm)
Prüfgewebe: je 10 g Baumwollnessel + 10 g Frottee
Waschmittel: 8 g/l

Zusammensetzung:

14,8 % Na-$C_{12}$-Alkylbenzolsulfonat (50 % wäßriger Lösung)
4,6 % des Anlagerungsproduktes von 7 Mol EO an $C_{13/15}$ Fettalkohol
2,8 % Seife
23,1 % Zeolith
11,1% Soda
5,6% Na-metasilikat
0,9 % Mg-Silikat
18,5 % Natriumperborat
9,3 % Natriumsulfat
9,3 % Polymer

Tabelle 2

Ergebnisse

| Beispiel Nr. | Prüfmethode | (1) Calcium phosphat-dispergier-vermögen $\left[\frac{mg\ Ca_3(PO_4)_2}{g\ W.S.}\right]$ | (1) Calcium diphosphat dispergier-vermögen $\left[\frac{mg\ Ca_2P_2O_7}{g\ W.S.}\right]$ | (2) Prüfung des Inkustierungs-inhibierung d. Trübungsmessung [NTU] | (3) Prüfung des Dispergier-vermögen f. Pigmentschutz | (4) Inkrustierung im Läunderometer % Asche Baumwoll-nessel | (4) Inkrustierung im Läunderometer % Asche Frottee |
|---|---|---|---|---|---|---|---|
| 1 | Polymer 1 | 759 | 213 | 180 | sehr gut | 1,68 | 3,30 |
| 2 | Polymer 2 | 2392 | 286 | 160 | sehr gut | 2,05 | 3,84 |
| 3 | Polymer 3 | 910 | 244 | 130 | gut | 1,54 | 4,10 |
| 4 | Polymer 4 | 2028 | 255 | 180 | sehr gut | 2,03 | 4,17 |
| 5 | Polymer 5 | 1394 | 192 | 160 | gut | 1,78 | 3,65 |
| Vgl.Bsp. 1 | Handelsüblicher Inkrustitions-inhibitor (Copolymerisat aus Maleinsäure und Acrylsäure) | 104 | 152 | 270 | ungenügend | 1,61 | 4,01 |
| Vgl.Bsp. 2 | kein Zusatz | - | - | - | - | 3,97 | 8,03 |

Die erfindungsgemäß verwendeten Polymeren 1 bis 5 ergeben in phosphatfreien Formulierungen deutlich reduzierte Aschewerte in Waschversuchen bei gleichzeitig gegenüber dem handelsüblichen Inkrustationsinhibitor stark verbessertem Dispergiervermögen für den von der Wäsche abgelösten Partikelschmutz. Auch in phosphatreduzierten Formulierungen ergeben die erfindungsgemäß zu verwendenden Polymeren 1 bis 5 reduzierte Aschewerte, die mit den Werten vergleichbar sind, die mit dem genannten handelsüblichen polymeren Inkrustationsinhibitor erreicht werden. Zusätzlich ist aber überraschenderweise bei den erfindungsgemäß zu verwendenden alkoxylierten Polymeren das Dispergiervermögen für Calciumphosphat und Calciumdiphosphat stark verbessert.

## Patentansprüche

1. Verwendung von Polymerisaten in Waschmitteln dadurch gekennzeichnet, daß man alkoxylierte, Carboxylgruppen enthaltende Polymerisate, die herstellbar sind durch Umsetzung von

(A) Polymerisaten, die mindestens eine monoethylenisch ungesättigte $C_3$- bis $C_6$-Carbonsäure einpolymerisiert enthalten, und

(B) 3 bis 80 Gew.%, bezogen auf die Polymerisate (A), Ethylenoxid, Propylenoxid, n-Butylenoxid, Isobutylenoxid oder deren Gemischen

in wäßrigem Medium bei Temperaturen bis zu 150°C,

als Builder, der gleichzeitig ein Inkrustationsinhibitor und ein Dispergiermittel für Schmutzteilchen in der Waschflotte ist, in Waschmitteln in Mengen von 0,1 bis 20 Gew.% einsetzt.

2. Verwendung nach Anspruch 1, dadurch gekennzeichnet, daß als Polymeriste (A) Homopolymerisate von monoethylenisch ungesättigten $C_3$- bis $C_6$-Carbonsäuren eingesetzt werden.

3. Verwendung nach Anspruch 1, dadurch gekennzeichnet, daß als Polymerisate (A) Copolymerisate aus

(a) monoethylenisch ungesättigten $C_3$- bis $C_6$-Monocarbonsäuren und

(b) monoethylenisch ungesättigten Dicarbonsäuren mit 4 bis 6 C-Atomen

eingesetzt werden.

4. Verwendung nach Anspruch 1, dadurch gekennzeichnet, daß als Polymerisate (A) Copolymerisate aus

(a) 5 bis 40 Gew.% mindestens einer monoethylenisch ungesättigten $C_3$- bis $C_6$-Monocarbonsäure,

(b) 5 bis 40 Gew.% mindestens einer monoethylenisch ungesättigten Dicarbonsäure mit 4 bis 6 C-Atomen,

(c) 0 bis 80 Gew.% mindestens eines Hydroxy-$C_2$- bis $C_6$-alkylesters von Mono- oder Dicarbonsäuren gemäß (a) und (b) und

(d) 0 bis 20 Gew.% mindestens eines Amids, Nitrils oder eines Esters von einwertigen 1 bis 4 C-Atome enthaltenden Alkoholen mit Mono- oder Dicarbonsäuren gemäß (a) und (b), Vinylphosphonsäure, Vinylsulfonsäure, Vinylacetat, Vinylpropionat und/oder Acrylamido-2-methylpropansulfonsäure,

wobei die Summe der Gew.% (a) bis (d) immer 100 beträgt, eingesetzt werden.

5. Verwendung nach den Ansprüchen 1 bis 4, dadurch gekennzeichnet, daß die alkoxylierten, Carboxylgruppen enthaltenden Polymerisate herstellbar sind durch Umsetzung der Polymerisate (A) und (B) in Gegenwart von 0,5 bis 5 Gew.%, bezogen auf die eingesetzten Alkylenoxide gemäß (B), Thioethern oder SH-Gruppen enthaltenden Verbindungen.

6. Verwendung nach den Ansprüchen 1 bis 5, dadurch gekennzeichnet, daß die alkoxylierten Polymerisate einen K-Wert von 8 bis 200 (bestimmt nach H. Fikentscher im wäßriger Lösung bei pH 7, einer Temperatur von 25°C und einer Polymerkonzentration des Na-Salzes von 1 Gew.%) haben.

7. Verwendung nach den Ansprüchen 1 bis 5, dadurch gekennzeichnet, daß die alkoxylierten Polymerisate einen K-Wert von 15 bis 100 (bestimmt nach H. Fikentscher in wäßriger Lösung bei pH 7, einer Temperatur von 25°C und einer Polymerkonzentration des Na-Salzes von 1 Gew.%) haben.

8. Verwendung nach den Ansprüchen 1 bis 7, dadurch gekennzeichnet, daß die Alkali- und/oder Ammoniumsalze von alkoxylierten, Carboxylgruppen enthaltenden Polymerisaten eingesetzt werden.

## Revendications

1. Utilisation de polymères dans des détergents, caractérisée en ce que l'on incorpore aux détergents et en proportions de 0,1 à 20% en poids, des polymères contenant des radicaux carboxyle, alcoxylés, que l'on peut préparer par la réaction

(A) de polymères qui contiennent, incorporé par polymérisation, au moins un acide carboxylique en $C_3$ à $C_6$, à insaturation monoéthylénique et

(B) de 3 à 80% en poids, par rapport aux polymères (A), d'oxyde d'éthylène, d'oxyde de propylène, d'oxyde de n-butylène, d'oxyde d'isobutylène, ou de leurs mélanges, en milieu aqueux et à des températures allant jusqu'à 150°C, a titre d'adjuvant de détergence qui est simultanément un inhibiteur d'incrustations et un agent dispersif des particules de souillure ou de saleté présentes dans le bain de lavage.

2. Utilisation suivant la revendication 1, caractérisée en ce qu'à titre de polymères (A), on met en oeuvre des homopolymères d'acides carboxyliques en $C_3$ à $C_6$, à insaturation monoéthylénique.

3. Utilisation suivant la revendication 1, caractérisée en ce qu'à titre de polymères (A), on met en oeuvre des copolymères constitués

(a) d'acides monocarboxyliques en $C_3$ à $C_6$, à insaturation monoéthylénique et (b) d'acides dicarboxyliques à 4 à 6 atomes de carbone, à insaturation monoéthylénique.

4. Utilisation suivant la revendication 1, caractérisée en ce qu'à titre de polymèes (A), on met en oeuvre des copolymères constitués de:

(a) 5 à 40% en poids d'au moins un acide monocarboxylique en $C_3$ à $C_6$, à insaturation monoéthylénique,

(b) 5 à 40% en poids d'au moins un acide dicarboxylique à 4 à 6 atomes de carbone, à insaturation monoéthylénique,

(c) 0 à 80% en poids d'au moins un ester hydroxyalkylique en $C_2$ à $C_6$ d'acides mono- ou dicarboxyliques selon (a) et (b) et (d) 0 à 20% en poids d'au moins un amide, nitrile ou ester d'alcools monohydroxylés contenant de 1 à 4 atomes de carbone d'acides mono- ou dicarboxyliques selon (a) ou (b), d'acide vinylphosphonique, d'acide vinylsulfonique, d'acétate de vinyle, de propionate de vinyle et/ou d'acide amido-2-méthylpropanesulfonique, où la somme des % en poids de (a) à (d) atteint toujours 100%.

5. Utilisation suivant les revendications 1 à 4, caractérisée en ce que l'on peut préparer les polymères contenant des radicaux carboxyle, alcoxylés par la réaction des polymères (A) et (B) en présence de 0,5 à 5% en poids, par rapport aux oxydes d'alkylène selon (B) mis en oeuvre, de thioethers ou de composés contenant des groupes SH.

6. Utilisation suivant les revendications 1 à 5, caractérisée en ce que les polymères alcoxylés possèdent une valeur K de 8 à 200 (déterminée selon H. Fikentscher en solution aqueuse, à un pH de 7, une température de 25°C et une concentration en polymère du sel de Na de 1% en poids).

7. Utilisation suivant les revendications 1 à 5, caractérisée en ce que les polymères alcoxylés possèdent une valeur K de 15 à 100 (déterminée selon H. Fikentscher en solution aqueuse, à un pH de 7, une température de 25°C et une concentration en polymère du sel de Na de 1% en poids).

8. Utilisation suivant les revendications 1 à 7, caractérisée en ce que l'on met en oeuvre les sels d'alcalis et/ou d'ammonium de polymères contenant des radicaux carboxyle, alcoxylés.

## Claims

1. Use of a polymer in detergents, wherein an oxyalkylated, carboxyl-containing polymer which can be prepared by reacting

(A) polymers which contain, as copolymerized units, one or more monoethylenically unsaturated $C_3$-$C_6$-carboxylic acids and

(B) from 3 to 80% by weight, based on the polymers (A), of ethylene oxide, propylene oxide, n-butylene oxide, isobutylene oxide or a mixture of these, in an aqueous medium at up to 150°C, is used as detergents as a builder which is simultaneously an incrustation inhibitor and a dispersant for dirt particles in the wash liquor, in amounts of from 0.1 to 20% by weight.

2. Use as claimed in claim 1, wherein the polymer (A) used is a homopolymer of monoethylenically unsaturated $C_3$-$C_6$-carboxylic acids.

3. Use as claimed in claim 1, wherein the polymer (A) used is a copolymer of (a) monoethylenically unsaturated $C_3$-$C_6$-monocarboxylic acids and (b) monoethylenically unsaturated dicarboxylic acids of 4 to 6 carbon atoms.

4. Use as claimed in claim 1, wherein the polymer (A) used is a copolymer of

(a) from 5 to 40% by weight of one or more monoethylenically unsaturated $C_3$-$C_6$-monocarboxylic acids,

(b) from 5 to 40% by weight of one or more monoethylenically unsaturated dicarboxylic acids of 4 to 6 carbon atoms,

(c) from 0 to 80% by weight of one or more hydroxy-$C_2$-$C_6$-alkyl esters of mono- or dicarboxylic acids according to (a) and (b) and

(d) from 0 to 20% by weight of one or more amides or nitriles of mono- or dicarboxylic acids according to (a) and (b) or one or more esters of monohydric $C_1$-$C_4$-alcohols with the said acids, vinylphosphonic acid, vinylsulfonic acid, vinyl acetate, vinyl propionate and/or acrylamido-2-methylpropanesulfonic acid, the sum of the percentages by weight (a) to (d) always being 100.

5. Use as claimed in claim 1 or 2 or 3 or 4, wherein the oxyalkylated, carboxyl-containing polymer can be prepared by reacting the polymers (A) and (B) in the presence of from 0.5 to 5% by weight, based on the alkylene oxides as in (B) used, of thioethers or SH-containing compounds.

6. Use as claimed in claim 1 or 2 or 3 or 4 or 5, wherein the oxyalkylated polymers have a K value of from 8 to 200 (determined according to H. Fikentscher in aqueous solution at pH 7, at 25°C and at a polymer concentration of the Na salt of 1% by weight).

7. Use as claimed in claim 1 or 2 or 3 or 4 or 5, wherein the oxyalkylated polymers have a K value of from 15 to 100 (determined according to H. Fikentscher in aqueous solution at pH 7, at 25°C and a polymer concentration of the Na salt of 1% by weight).

8. Use as claimed in claim 1 or 2 or 3 or 4 or 5 or 6 or 7, wherein the alkali metal and/or ammonium salts of oxyalkylated, carboxyl-containing polymers are used.